# EUROPÄISCHE PATENTSCHRIFT

(11) **EP 3 767 061 B1**
(45) Veröffentlichungstag und Bekanntmachung des Hinweises auf die Patenterteilung: **04.05.2022**
(21) Anmeldenummer: 19425052.8
(22) Anmeldetag: 15.07.2019
(51) Int. Cl.: E05F 15/622, F16D 11/04

(54) **TÜRANTRIEB FÜR EINE TÜR, INSBESONDERE EINES MÖBELSTÜCKS ODER EINES GERÄTS, VERFAHREN ZUM BETREIBEN EINES SOLCHEN TÜRANTRIEBS SOWIE VORRICHTUNG MIT WENIGSTENS EINEM SOLCHEN TÜRANTRIEB**
DOOR DRIVE FOR A DOOR, ESPECIALLY OF A PIECE OF FURNITURE OR A DEVICE, METHOD FOR OPERATING SUCH A DOOR DRIVE AND DEVICE COMPRISING AT LEAST ONE SUCH DOOR DRIVE
ENTRAÎNEMENT POUR UNE PORTE, EN PARTICULIER D'UN MEUBLE OU D'UN APPAREIL, PROCÉDÉ DE FONCTIONNEMENT D'UN TEL ENTRAÎNEMENT DE PORTE AINSI QUE DISPOSITIF DOTÉ D'AU MOINS UN TEL ENTRAÎNEMENT DE PORTE

(43) Veröffentlichungstag der Anmeldung: 20.01.2021
(73) Patentinhaber: Apparatebau Gronbach S.R.L., 39004 Laag/Neumarkt (BZ) (IT)
(72) Erfinder: MEURER, Gerold, 39040 Margreid an der Weinstraße (BZ) (IT); MARGONARI, Massimiliano, 38100 Trento (IT)
(74) Vertreter: Hofstetter, Schurack & Partner

(56) Entgegenhaltungen:
- DE-A1-102016 113 353
- US-A1- 2019 040 670

## Beschreibung

Die Erfindung betrifft einen Türantrieb gemäß dem Oberbegriff von Patentanspruch 1, ein Verfahren zum Betreiben eines solchen Türantriebs gemäß dem Oberbegriff von Patentanspruch 13 und eine Vorrichtung mit wenigstens einem solchen Türantrieb. Die EP 2 148 035 A2 offenbart eine Anordnung, mit einem Gehäuse, insbesondere eines Kühl- und/oder Gefriergeräts. Die Anordnung umfasst ferner ein an dem Gehäuse um eine Schwenkachse eines Scharniers verschwenkbar angelenkte Tür und mindestens eine Antriebseinrichtung zum Verschwenken der Tür gegenüber dem Gehäuse. Dabei umfasst die Antriebseinrichtung eine Antriebseinheit, mittels welcher über wenigstens ein Kraftübertragungsmittel ein Drehmoment bezüglich der Scharnierachse auf die Tür ausübbar ist. US2019/040670A1 offenbart ebenso ein Beispiel eines Türantriebs.

Aufgabe der vorliegenden Erfindung ist es, einen Türantrieb für eine Tür, insbesondere ein Verfahren zum Betreiben eines solchen Türantriebs sowie eine Vorrichtung zu schaffen, sodass die Tür auf besonders vorteilhafte Weise bewegt werden kann.

Diese Aufgabe wird erfindungsgemäß durch einen Türantrieb mit den Merkmalen des Patentanspruchs 1, durch ein Verfahren mit den Merkmalen des Patentanspruchs 13 sowie durch eine Vorrichtung mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Türantrieb für eine Tür, insbesondere eines Möbelstücks oder eines, insbesondere elektrischen oder elektronischen, Geräts. Das Gerät ist vorzugsweise ein Kühl- und/oder Gefriergerät. Dies bedeutet, dass das Gerät beziehungsweise das Möbelstück in seinem vollständig hergestellten Zustand beispielsweise ein auch als Korpus bezeichnetes Gehäuseelement und die zuvor genannte Tür aufweist, welche, insbesondere über wenigstens ein Scharnier, bewegbar, insbesondere verschwenkbar, an dem Gehäuseelement gehalten und somit relativ zu dem Gehäuseelement verschwenkbar ist, während die Tür, insbesondere über das Scharnier, mit dem Gehäuseelement verbunden ist. Der Türantrieb wird dabei genutzt beziehungsweise nutzbar, um die Tür relativ zu dem Gehäuseelement zu bewegen, insbesondere zu verschwenken. Insbesondere kann beispielsweise die Tür mittels des Türantriebs geöffnet und/oder geschlossen werden. Das Gerät und das Möbelstück werden zusammenfassend auch als Vorrichtungen bezeichnet beziehungsweise sind jeweilige Vorrichtungen. Der Türantrieb weist einen Antriebsmotor auf, welcher vorzugsweise als ein Elektromotor ausgebildet und somit elektrisch beziehungsweise mittels elektrischer Energie beziehungsweise elektrischem Strom betreibbar ist. Der Türantrieb weist außerdem eine von dem Antriebsmotor antreibbare und dadurch, insbesondere um eine Wellendrehachse, drehbare Antriebswelle auf. Der Antriebsmotor weist beispielsweise einen Stator und einen von dem Stator antreibbaren und dadurch um eine Motordrehachse relativ zu dem Stator drehbaren Rotor auf, wobei die Welle beispielsweise von dem Rotor antreibbar ist. Beispielsweise ist die Welle Bestandteil des Rotors oder drehfest mit dem Rotor verbunden. Beispielsweise ist die Welle koaxial zu dem Rotor angeordnet, sodass die Motordrehachse und die Wellendrehachse zusammenfallen.

Der Türantrieb weist außerdem eine Kupplung und eine Gewindespindel auf, welche über die Kupplung von der Antriebswelle antreibbar und dadurch, insbesondere um eine Spindeldrehachse, drehbar ist. Vorzugsweise ist die einfach auch als Spindel bezeichnete Gewindespindel koaxial zu der Welle angeordnet, sodass die Spindeldrehachse mit der Wellendrehachse zusammenfällt. Alternativ oder zusätzlich ist die Spindel vorzugsweise koaxial zu dem Antriebsmotor beziehungsweise zu dem Rotor angeordnet, sodass beispielsweise die Spindeldrehachse mit der Motordrehachse zusammenfällt.

Die Antriebswelle, die Gewindespindel sowie gegebenenfalls der Rotor sind beispielsweise relativ zu einem Gehäuse des Türantriebs drehbar. Das Gehäuse des Türantriebs kann das Gehäuseelement der Vorrichtung sein, oder das Gehäuse ist ein separat von dem Gehäuseelement ausgebildetes und zusätzlich dazu vorgesehenes Gehäuse, welches beispielsweise zumindest mittelbar, insbesondere direkt, an dem Gehäuseelement befestigt, insbesondere festgelegt, sein kann. Die Gewindespindel weist beispielsweise ein erstes Gewinde, insbesondere in Form eines Außengewindes, auf. Dabei ist beispielsweise ein Schraubelement vorgesehen, welches beispielsweise ein mit dem ersten Gewinde korrespondierendes und beispielsweise als Innengewinde ausgebildetes zweites Gewinde aufweist. Das Schraubelement ist beispielsweise eine Mutter und kann auf die Gewindespindel aufgeschraubt sein.

Die Tür ist dabei über die Gewindespindel antreibbar und dadurch relativ zu dem Gehäuseelement bewegbar. Wird beispielsweise die Gewindespindel, insbesondere mittels des Antriebsmotors über die Kupplung, relativ zu dem Schraubelement gedreht, so wandeln das erste Gewinde und das zweite Gewinde die Relativdrehung zwischen der Gewindespindel und dem Schraubelement in eine translatorische Bewegung des Schraubelements um, dessen translatorische Bewegung entlang der Gewindespindel und dabei insbesondere entlang der Spindeldrehachse und relativ zu dem Gehäuse erfolgt. Hierzu ist beispielsweise das Schraubelement gegen eine um die Spindeldrehachse und relativ zu dem Gehäuse erfolgende Drehung gesichert oder eine solche Drehung des Schraubelements um die Spindeldrehachse relativ zu dem Gehäuse ist zumindest begrenzt, sodass dann, wenn die Gewindespindel um die Spindeldrehachse gedreht wird, das Schraubelement nicht mit der Gewindespindel mitgedreht wird, sondern eine Relativdrehung zwischen der Gewindespindel und dem Schraubelement erfolgt. In der Folge wird das Schraubelement entlang der Gewindespindel und insbesondere relativ zu dem Gehäuse verschoben, wodurch beispielsweise die Tür relativ zu dem Gehäuseelement bewegbar ist. Somit kann beispielsweise die Tür über das Schraubelement von der Gewindespindel angetrieben und relativ zu dem Gehäuseelement bewegt, insbesondere verschwenkt, werden.

Um nun die Tür beziehungsweise das als Übertragungselement fungierende Schraubelement auf besonders vorteilhafte und bedarfsgerechte Weise mit dem Antriebsmotor koppeln und von dem Antriebsmotor entkoppeln und somit die Tür auf besonders vorteilhafte Weise bewegen zu können, ist es erfindungsgemäß vorgesehen, dass die Kupplung ein beispielsweise als Mitnehmerscheibe ausgebildetes Mitnehmerelement aufweist. Die Kupplung weist außerdem ein Betätigungselement auf, welches durch Drehen der Antriebswelle von der Antriebswelle antreibbar und dadurch um eine Betätigungsdrehachse, insbesondere relativ zu dem Gehäuse, drehbar ist. Vorzugsweise ist das Betätigungselement koaxial zu der Antriebswelle angeordnet, sodass die Betätigungsdrehachse mit der Wellendrehachse zusammenfällt. Das Betätigungselement weist dabei wenigstens einen ersten Betätigungsbereich auf.

Die Kupplung umfasst außerdem ein Kupplungselement, welches beispielsweise als Kupplungsscheibe ausgebildet sein kann. Das Kupplungselement weist wenigstens einen mit dem ersten Betätigungsbereich korrespondierenden zweiten Betätigungsbereich auf und ist entlang der Betätigungsdrehachse relativ zu dem Mitnehmerelement und insbesondere relativ zu dem Gehäuse zwischen wenigstens einer Entkoppelstellung und wenigstens einer Koppelstellung translatorisch bewegbar, das heißt verschiebbar. In der Entkoppelstellung ist das Kupplungselement von dem Mitnehmerelement entkoppelt, sodass in der Entkoppelstellung keine Drehmomente zwischen dem Kupplungselement und dem Mitnehmerelement übertragen werden können. Beispielsweise ist das Kupplungselement in der Entkoppelstellung, insbesondere vollständig, von dem Mitnehmerelement beabstandet, insbesondere zumindest entlang der Betätigungsdrehachse. In der Koppelstellung ist das Kupplungselement mit dem Mitnehmerelement, insbesondere drehmomentübertragend, gekoppelt, sodass in der Koppelstellung Drehmomente zwischen dem Kupplungselement und dem Mitnehmerelement übertragbar sind. Befindet sich somit beispielsweise das Kupplungselement in der Koppelstellung, und wird das Kupplungselement beispielsweise in der Koppelstellung von der Antriebswelle angetrieben und dadurch beispielsweise um die Betätigungsdrehachse gedreht, so nimmt das Kupplungselement das Mitnehmerelement mit, sodass dann das Mitnehmerelement auch, insbesondere um die Betätigungsdrehachse, insbesondere relativ zu dem Gehäuse gedreht wird.

Mittels der Betätigungsbereiche ist eine durch Drehen der Antriebswelle bewirkbare oder bewirkte und beispielsweise um die Betätigungsdrehachse erfolgende Relativdrehung zwischen dem Betätigungselement und dem Kupplungselement in eine entlang der Betätigungsdrehachse, relativ zu dem Mitnehmerelement, relativ zu dem Betätigungselement und vorzugsweise relativ zu dem Gehäuse und in Richtung des Mitnehmerelements erfolgende, translatorische Bewegung des Kupplungselements aus der Entkoppelstellung in die Koppelstellung umwandelbar. Mit anderen Worten, wird das Betätigungselement beispielsweise von der Antriebswelle angetrieben und hierdurch um die Betätigungsdrehachse relativ zu dem Gehäuse und insbesondere relativ zu dem Kupplungselement gedreht, während sich das Kupplungselement noch in der Entkoppelstellung befindet, so wird diese Relativdrehung zwischen dem Kupplungselement und dem Betätigungselement mittels der Betätigungsbereiche in eine solche Bewegung des Kupplungselements umgewandelt, welche sich im Rahmen der zuvor genannten Bewegung entlang der Betätigungsdrehachse relativ zu dem Betätigungselement, relativ zu dem Mitnehmerelement und relativ zu dem Gehäuse entlang der Betätigungsdrehachse verschiebt und dabei auf das Mitnehmerelement zu verschiebt, derart, dass sich das Kupplungselement aus der Entkoppelstellung in die Koppelstellung bewegt beziehungsweise verschiebt und in der Folge drehmomentübertragend mit dem Mitnehmerelement gekoppelt wird beziehungsweise ist. Wird dann, das heißt nach Erreichen der Koppelstellung durch das Kupplungselement, das Betätigungselement beispielsweise weiter um die Betätigungsdrehachse relativ zu dem Gehäuse gedreht, so wird hierdurch das Kupplungselement, insbesondere um die Betätigungsdrehachse, relativ zu dem Gehäuse gedreht. Da sich dabei das Kupplungselement in der Koppelstellung befindet, nimmt das Kupplungselement das Mitnehmerelement mit, wodurch das Mitnehmerelement von dem Kupplungselement, insbesondere um die Betätigungsdrehachse, relativ zu dem Gehäuse gedreht wird. Das Mitnehmerelement wiederum nimmt zumindest mittelbar, insbesondere direkt, die Gewindespindel mit, sodass die Gewindespindel um die Spindeldrehachse relativ zu dem Gehäuse gedreht wird. Hierzu ist beispielsweise das Mitnehmerelement drehmomentübertragend mit der Gewindespindel verbunden, insbesondere drehfest mit der Gewindespindel verbunden.

In der Koppelstellung ist ein Kraft- beziehungsweise Drehmomentenübertragungspfad zwischen der Gewindespindel, insbesondere der Tür, und dem Antriebsmotor, insbesondere über die Kupplung, geschlossen, sodass beispielsweise Kräfte beziehungsweise Drehmomente zwischen der Gewindespindel beziehungsweise der Tür und dem Antriebsmotor über den Kraft- beziehungsweise Drehmomentenübertragungspfad übertragen werden können. In der Entkoppelstellung jedoch ist der Kraft- beziehungsweise Drehmomentenübertragungspfad, insbesondere durch die Kupplung, unterbrochen, sodass in der Entkoppelstellung keine Kräfte beziehungsweise Drehmomente zwischen der Gewindespindel beziehungsweise der Tür und dem Antriebsmotor übertragen werden können. In der Folge ist es beispielsweise möglich, dass die Tür in dem entkoppelten Zustand von einer Person manuell relativ zu dem Gehäuse bewegt, insbesondere verschwenkt, wird, ohne dass hierbei der Antriebsmotor beziehungsweise dessen Rotor von der Tür angetrieben wird. Wird beispielsweise die Tür von einer Person relativ zu dem Gehäuseelement manuell bewegt, während sich das Kupplungselement in der Entkoppelstellung befindet, so wird dann beispielsweise das Schraubelement relativ zu dem Gehäuse translatorisch bewegt, wodurch beispielsweise die Gewindespindel um die Spindeldrehachse relativ zu dem Gehäuse gedreht wird. Da sich dabei jedoch das Kupplungselement in der Entkoppelstellung befindet, werden die Antriebswelle und der Rotor nicht angetrieben und somit nicht relativ zu dem Gehäuse gedreht. In der Folge kann die Person die Tür auf besonders einfache Weise manuell bewegen.

Da es erfindungsgemäß vorgesehen ist, mittels der Betätigungsbereiche eine Relativdrehung zwischen dem Betätigungselement und dem Kupplungselement in die zuvor beschriebene Bewegung des Kupplungselements aus der Entkoppelstellung in die Koppelstellung umzuwandeln, und da die Relativdrehung zwischen dem Betätigungselement und dem Kupplungselement mittels des Antriebsmotors bewirkt wird beziehungsweise bewirkbar ist, ist es erfindungsgemäß vorgesehen, ein und denselben Antriebsmotor, insbesondere ein und denselben Rotor, sowohl zum Drehen der Gewindespindel und somit zum Bewegen der Tür als auch zum Bewegen des Kupplungselements aus der Entkoppelstellung in die Koppelstellung zu verwenden. In der Folge kann ein zusätzlich zu dem Antriebsmotor vorgesehener, von dem Antriebsmotor unterschiedlicher Aktor zum Bewegen des Kupplungselements aus der Entkoppelstellung in die Koppelstellung vermieden werden, sodass die Teileanzahl und somit die Kosten, der Bauraumbedarf und das Gewicht des Türantriebs gering gehalten werden kann. Somit ist es vorzugsweise vorgesehen, dass der erfindungsgemäße Türantrieb frei von einem zusätzlich zu dem Antriebsmotor vorgesehenen und zum Bewegen des Kupplungselements aus der Entkoppelstellung in die Koppelstellung ausgebildeten Aktor ist.

In vorteilhafter Ausgestaltung der Erfindung ist das sich in der Koppelstellung befindende Kupplungselement durch Drehen des Betätigungselements antreibbar und dadurch mit dem Betätigungselement mitdrehbar, wobei durch Drehen des sich in der Koppelstellung befindenden Kupplungselements das Mitnehmerelement und über das Mitnehmerelement die Gewindespindel von dem Mitnehmerelement antreibbar und dadurch drehbar sind. Das sich in der Koppelstellung befindende Kupplungselement wird beispielsweise dadurch von dem Betätigungselement angetrieben und, insbesondere um die Betätigungsdrehachse relativ zu dem Gehäuse, gedreht, dass das sich in der Koppelstellung befindende Kupplungselement gegen eine ausgehend von der Koppelstellung weitere, entlang der Betätigungsdrehachse und relativ zu dem Gehäuse erfolgende und von dem Betätigungselement wegweisende Verschiebung gesichert ist. Mit anderen Worten, die Betätigungsbereiche bewirken sozusagen, dass bei einer Relativdrehung zwischen dem Betätigungselement und dem Kupplungselement das sich zunächst in der Entkoppelstellung befindende Kupplungselement sozusagen dem Betätigungselement beziehungsweise dessen Drehung ausweicht und sich hierfür entlang der Betätigungsdrehachse von dem Betätigungselement weg verschiebt und auf das Mitnehmerelement zu verschiebt, wobei dieses Verschieben des Kupplungselements von dem Betätigungselement weg und auf das Mitnehmerelement zu solange zugelassen ist beziehungsweise erfolgt, bis das Kupplungselement die Koppelstellung erreicht. In der Koppelstellung ist das Kupplungselement, insbesondere mittels des Mitnehmerelements, gegen eine weitere, entlang der Betätigungsdrehachse erfolgende Verschiebung von dem Betätigungselement weg gesichert, sodass durch weiteres Drehen des Betätigungselements das Kupplungselement mittels des Betätigungselements, insbesondere um die Betätigungsdrehachse relativ zu dem Gehäuse, gedreht wird. In der Folge nimmt das Kupplungselement das Mitnehmerelement mit, wodurch das Mitnehmerelement und in der Folge die Gewindespindel relativ zu dem Gehäuse gedreht werden.

Als besonders vorteilhaft hat es sich dabei gezeigt, wenn die Betätigungsbereiche in einer jeweiligen Ebene verlaufen, welche schräg zur Betätigungsdrehachse verläuft. Hierdurch wird beispielsweise ein um die Drehachse verlaufendes Drehmoment, mittels welchem beispielsweise das Betätigungselement relativ zu dem sich zunächst in der Entkoppelstellung befindenden Kupplungselement gedreht wird, beziehungsweise eine das Drehmoment bewirkende Kraft derart aufgeteilt oder zerlegt, dass aus dem Drehmoment beziehungsweise aus der Kraft eine Kraftkomponente resultiert, deren Wirkrichtung parallel zu der Betätigungsdrehachse verläuft oder mit der Betätigungsdrehachse zusammenfällt und insbesondere von dem Betätigungselement weg und in Richtung des Mitnehmerelements weist. Durch diese Kraftkomponente wird schließlich die translatorische Bewegung des Kupplungselements entlang der Betätigungsdrehachse aus der Entkoppelstellung in die Koppelstellung bewirkt. In der Koppelstellung ist beispielsweise das Kupplungselement in eine beispielsweise parallel zur Betätigungsdrehachse verlaufende und von dem Betätigungselement zu dem Mitnehmerelement weisende Abstützrichtung zumindest mittelbar, insbesondere direkt, an dem Mitnehmerelement abgestützt und dadurch gegen eine weitere, in die Abstützrichtung erfolgende Verschiebung von dem Betätigungselement weg gesichert.

Beispielsweise gleiten die Betätigungsbereiche bei der Relativdrehung zwischen dem Betätigungselement und dem Kupplungselement und bei der dadurch bewirkten, translatorischen Bewegung des Kupplungselements aus der Entkoppelstellung in die Koppelstellung aneinander, insbesondere direkt, ab. Insbesondere bewirken die Betätigungsbereiche, dass der Relativdrehung zwischen dem Betätigungselement und dem Kupplungselement eine Verschiebung des Kupplungselements aus der Entkoppelstellung in die Koppelstellung überlagert wird, sodass derselbe Antriebsmotor, insbesondere derselbe Rotor des Antriebsmotors, genutzt werden kann, um sowohl das Kupplungselement aus der Entkoppelstellung in die Koppelstellung zu bewegen als auch die Gewindespindel zu drehen und in der Folge die Tür zu bewegen.

Eine weitere Ausführungsform zeichnet sich dadurch aus, dass sich die Betätigungsbereiche in der Entkoppelstellung in um die Betätigungsdrehachse verlaufender Umfangsrichtung gegenseitig überlappen. Hierdurch muss das Betätigungselement nicht erst gesondert verschoben werden, um durch Drehen des Betätigungselements relativ zu dem Kupplungselement das Verschieben des Kupplungselements aus der Entkoppelstellung in die Koppelstellung zu bewegen, sondern das Betätigungselement kann mittels des Rotors einfach nur gedreht werden, um das Kupplungselement aus der Entkoppelstellung in die Koppelstellung zu bewegen. Auf diese Weise kann das Kupplungselement aus der Entkoppelstellung in die Koppelstellung translatorisch bewegt werden, ohne das Betätigungselement relativ zu dem Gehäuse zu verschieben. Somit können zusätzliche Aktoren vermieden werden, sodass die Teileanzahl und somit das Gewicht, die Kosten und der Bauraumbedarf des Türantriebs besonders gering gehalten werden können.

Bei einer besonders vorteilhaften Ausführungsform der Erfindung begrenzt einer der Betätigungsbereiche, insbesondere der zweite Betätigungsbereich, eine Aufnahme zumindest teilweise, in welche der andere Betätigungsbereich, insbesondere der erste Betätigungsbereich, zumindest in der Entkoppelstellung eingreift. Einerseits kann dadurch der Bauraumbedarf des Türantriebs insbesondere in axialer Richtung des Türantriebs besonders gering gehalten werden. Andererseits muss das Betätigungselement nicht erst relativ zu dem Gehäuse verschoben werden, um in Zusammenwirken mit dem Kupplungselement gebracht zu werden, sondern das Betätigungselement kann, ohne es zu verschieben, einfach um die Betätigungsdrehachse gedreht werden, um dadurch gleich das Verschieben des Kupplungselements zu bewirken.

Als weiterhin besonders vorteilhaft hat es sich gezeigt, wenn wenigstens ein vorzugsweise als mechanische Feder ausgebildetes Federelement vorgesehen ist, welches durch Bewegen des Kupplungselements aus der Entkoppelstellung in die Koppelstellung zu spannen ist und dadurch zumindest in der Koppelstellung eine zumindest mittelbar auf das Kupplungselement und beispielsweise entlang der Betätigungsdrehachse wirkende Federkraft bereitstellt, mittels welcher eine Bewegung des Kupplungselements aus der Koppelstellung in die Entkoppelstellung bewirkbar ist. Hierdurch kann das Kupplungselement auf besonders einfache und somit bauraum-, gewichts- und kostengünstige Weise aus der Koppelstellung zurück in die Entkoppelstellung bewegt werden.

In weiterer vorteilhafter Ausgestaltung der Erfindung ist das Kupplungselement relativ zu dem Gehäuse drehbar und relativ zu dem Gehäuse zwischen der Koppelstellung und der Entkoppelstellung translatorisch bewegbar, das heißt verschiebbar. Dabei ist wenigstens ein separat von dem Kupplungselement und vorzugsweise separat von dem Gehäuse ausgebildetes Bremselement vorgesehen, mittels welchem das Kupplungselement zumindest bezüglich dessen relativ zu dem Gehäuse erfolgender Drehung gegen das Gehäuse abbremsbar oder abgebremst ist. Hierdurch kann sichergestellt werden, dass dann, wenn sich das Kupplungselement in der Entkoppelstellung befindet und das Betätigungselement von dem Antriebsmotor angetrieben und somit um die Betätigungsdrehachse relativ zu dem Gehäuse gedreht wird, es insbesondere solange, bis sich das Kupplungselement noch nicht in der Koppelstellung befindet, zu einer Relativdrehung zwischen dem Betätigungselement und dem Kupplungselement kommt, sodass in der Folge auf die beschriebene Weise das Kupplungselement aus der Entkoppelstellung in die Koppelstellung verschoben wird. Mit anderen Worten stellt das Bremselement die gewünschte, die Bewegung des Kupplungselements aus der Entkoppelstellung in die Koppelstellung bewirkende Relativdrehung zwischen dem Betätigungselement und dem Kupplungselement sicher. Dieser Ausführungsform liegt insbesondere die Erkenntnis zugrunde, dass es beispielsweise bei Einsatz eines Getriebes, über welches die Antriebswelle von dem Antriebsmotor angetrieben wird, und insbesondere dann, wenn das Getriebe eine große Übersetzung aufweist, zu solch ungünstigen Trägheitsverhältnissen kommen kann, dass beispielsweise dann, wenn das Kupplungselement nicht mittels des Bremselements gegenüber dem Gehäuse und gegenüber einer relativ zu dem Gehäuse erfolgenden Drehung abgebremst wird, das sich in der Entkoppelstellung befindende Kupplungselement mit dem Betätigungselement mitgedreht wird, ohne dass eine Relativdrehung zwischen dem Betätigungselement und dem sich in der Entkoppelstellung befindenden Kupplungselement auftritt und somit ohne dass das sich in der Entkoppelstellung befindende Kupplungselement in die Koppelstellung verschoben wird. Insgesamt ist erkennbar, dass durch Verwendung des Bremselements auch dann eine gewünschte Relativdrehung zwischen dem Betätigungselement und dem sich in der Entkoppelstellung befindenden Kupplungselement und die daraus resultierende Verschiebung des Kupplungselements aus der Entkoppelstellung in die Koppelstellung sichergestellt werden kann, wenn ein eine hohe Übersetzung aufweisendes Getriebe zum Einsatz kommt, über welches die Antriebswelle von dem Rotor angetrieben wird.

Um eine besonders vorteilhafte Bremswirkung zu realisieren, ist es in einer Ausgestaltung der Erfindung vorgesehen, dass zumindest eine erste Fläche des Bremselements zumindest eine zweite Fläche des Kupplungselements direkt berührt. Unter dem Merkmal, dass mittels des Bremselements das Kupplungselement zumindest bezüglich dessen relativ zu dem Gehäuse erfolgender Drehung gegen das Gehäuse abbremsbar ist, ist zu verstehen, dass das Bremselement eine relativ zu dem Gehäuse und insbesondere um die Betätigungsdrehachse erfolgende Drehung des Kupplungselements nicht vollständig vermeidet, sondern zulässt und einer solchen Relativdrehung zwischen dem Kupplungselement und dem Gehäuse lediglich entgegensteht.

Als besonders vorteilhaft hat es sich gezeigt, wenn sich die Flächen in einer jeweiligen, schräg zur Betätigungsdrehachse verlaufenden Ebene erstrecken. Mit anderen Worten erstreckt sich beispielsweise eine erste der Flächen in einer ersten Ebene, und die zweite Fläche erstreckt sich in einer zweiten Ebene, wobei die Ebenen schräg zur Betätigungsdrehachse verlaufen. Vorzugsweise verlaufen die Ebenen parallel zueinander. Die jeweilige Fläche ist somit beispielsweise ein Keil, ein Konus, keilförmig oder konusförmig. Mit anderen Worten ist es vorzugsweise vorgesehen, dass die Flächen konusförmig oder konussegmentförmig ausgebildet sind, sodass beispielsweise die jeweilige Fläche durch einen jeweiligen Konus, insbesondere durch einen jeweiligen Reibkonus, gebildet ist. Dabei ist das Kupplungselement gegenüber dessen relativ zu dem Gehäuse und beispielsweise um die Betätigungsdrehachse erfolgender Drehung mittels der Reibkonusse gegenüber dem Gehäuse abbremsbar. Unter dem Merkmal, dass sich die jeweilige Fläche in einer jeweiligen, schräg zu der Betätigungsdrehachse verlaufenden Ebene erstreckt, kann auch verstanden werden, dass beispielsweise dann, wenn die jeweilige Fläche konusförmig ausgebildet ist, eine die jeweilige Fläche tangierende Ebene schräg zu der Betätigungsdrehachse verläuft.

Es wurde gefunden, dass durch Abbremsen des Kupplungselements gegenüber dem Gehäuse mittels der beschriebenen Reibkonusse das Kupplungselement hinsichtlich dessen relativ zu dem Gehäuse erfolgender Drehung vorteilhaft abgebremst werden kann, um eine die Verschiebung des Kupplungselements aus der Entkoppelstellung in die Koppelstellung bewirkende Relativdrehung zwischen dem Betätigungselement und dem Kupplungselement sicherzustellen. Eine übermäßige, unerwünschte Abbremsung des Kupplungselements hinsichtlich dessen relativ zu dem Gehäuse erfolgender Verschiebung aus der Entkoppelstellung in die Koppelstellung kann jedoch durch Verwendung der Reibkonusse vermieden werden. Somit kann einerseits sichergestellt werden, dass das Kupplungselement hinreichend abgebremst wird, um eine Relativdrehung zwischen dem Betätigungselement und dem Kupplungselement sicherzustellen. Eine übermäßige Abbremsung des Kupplungselements entlang der Betätigungsdrehachse kann jedoch vermieden werden.

Vorzugsweise ist das Bremselement mit dem Kupplungselement relativ zu dem Gehäuse mitverschiebbar. Beispielsweise ist das Bremselement über eine beispielsweise als Blattfeder ausgebildete Feder, welche vorzugsweise eine mechanische Feder ist, mit dem Gehäuse gekoppelt beziehungsweise an dem Gehäuse gehalten. Mittels der Feder ist beispielsweise die Fläche des Bremselements in, insbesondere direkter, Stützanlage mit der Fläche des Kupplungselements gehalten. Beispielsweise ist das Bremselement entlang der Feder relativ zu dem Gehäuse mit dem Kupplungselement mitverschiebbar. Bei entlang der Betätigungsdrehachse und relativ zu dem Gehäuse erfolgenden Relativverschiebungen zwischen dem Kupplungselement und dem Gehäuse und somit zwischen dem Bremselement und dem Gehäuse gleitet beispielsweise das Bremselement entlang der Feder und/oder an der Feder ab. Die Feder fungiert somit beispielsweise als Führung, mittels welcher das Bremselement bei entlang der Betätigungsdrehachse und relativ zu dem Gehäuse erfolgenden Verschiebungen zu führen ist beziehungsweise geführt wird. Alternativ oder zusätzlich ist beispielsweise das Bremselement mittels der Feder gegen relativ zu dem Gehäuse und um die Betätigungsdrehachse erfolgende Drehungen gesichert.

Eine weitere Ausführungsform zeichnet sich dadurch aus, dass eine der Flächen eine Ausnehmung zumindest teilweise begrenzt, in welche die andere Fläche eingreift. Dadurch kann eine besonders vorteilhafte Abbremsung des Kupplungselements sichergestellt werden.

Bei einer besonders vorteilhaften Ausführungsform der Erfindung ist es vorgesehen, dass das Bremselement aus einem ersten Werkstoff, insbesondere aus einem Kunststoff und vorzugsweise aus einem faserverstärkten Kunststoff, und das Kupplungselement aus einem von dem ersten Werkstoff unterschiedlichen zweiten Werkstoff, insbesondere aus einem metallischen Werkstoff, gebildet ist. Hierdurch kann eine besonders vorteilhafte Bremsung des Kupplungselements gewährleistet werden.

Eine weitere Ausführungsform zeichnet sich dadurch aus, dass das Kupplungselement und das Mitnehmerelement in der Koppelstellung formschlüssig und/oder kraftschlüssig zusammenwirken und dadurch, insbesondere drehmomentübertragend, miteinander gekoppelt sind. Dadurch kann sichergestellt werden, dass das Kupplungselement das Mitnehmerelement sicher mitnimmt.

Ein zweiter Aspekt der Erfindung betrifft ein Verfahren zum Betreiben eines Türantriebs, insbesondere gemäß dem ersten Aspekt der Erfindung, für eine Tür. Bei dem Verfahren wird die Tür mittels des Antriebs angetrieben und dadurch relativ zu einem Gehäuseelement aus einer ersten Stellung in eine von der ersten Stellung unterschiedliche zweite Stellung bewegt. Der Türantrieb weist einen Antriebsmotor und eine Antriebswelle auf, welche beim Antreiben der Tür von dem Antriebsmotor angetrieben und dadurch gedreht wird. Der Türantrieb weist außerdem eine Kupplung und eine Gewindespindel auf, welche beim Antreiben der Tür über die Kupplung von der Antriebswelle angetrieben und dadurch gedreht wird, wodurch die Tür über die Gewindespindel, die Kupplung und die Antriebswelle von dem Motor angetrieben wird.

Um die Tür besonders vorteilhaft bewegen zu können, ist es erfindungsgemäß vorgesehen, dass die Kupplung ein Mitnehmerelement und ein Betätigungselement aufweist, welches durch das Drehen der Antriebswelle von der Antriebswelle angetrieben und dadurch um eine Betätigungsdrehachse gedreht wird und wenigstens einen ersten Betätigungsbereich aufweist. Die Kupplung weist außerdem ein Kupplungselement auf, welches wenigstens einen mit dem ersten Betätigungsbereich korrespondierenden zweiten Betätigungsbereich aufweist und entlang der Betätigungsdrehachse relativ zu dem Mitnehmerelement zwischen wenigstens einer Entkoppelstellung, in welcher das Kupplungselement von dem Mitnehmerelement entkoppelt ist, und wenigstens einer Koppelstellung translatorisch bewegbar ist, in welcher das Kupplungselement mit dem Mitnehmerelement gekoppelt ist. Mittels der Betätigungsbereiche wird eine durch Drehen der Antriebswelle bewirkte Relativdrehung zwischen dem Betätigungselement und dem Kupplungselement in eine entlang der Betätigungsdrehachse, relativ zu dem Mitnehmerelement, relativ zu dem Betätigungselement und in Richtung des Mitnehmerelements erfolgende, translatorische Bewegung des Kupplungselements aus der Entkoppelstellung in die Koppelstellung umgewandelt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Um beispielsweise eine insbesondere mittels des zuvor genannten Federelements bewirkte oder bewirkbare Bewegung des Kupplungselements aus der Koppelstellung zurück in die Entkoppelstellung auf einfache und kostengünstige Weise zuzulassen, ist es in vorteilhafter Ausgestaltung der Erfindung vorgesehen, dass zum Bewegen der Tür in die zweite Stellung das Betätigungselement über die Antriebswelle mittels des Antriebsmotors in eine erste Drehrichtung, insbesondere relativ zu dem Gehäuse, gedreht wird. Nach dem Bewegen der Tür in die zweite Stellung wird das Betätigungselement über die Antriebswelle mittels des Antriebsmotors, insbesondere automatisch, derart ein Stück in eine der ersten Drehrichtung entgegengesetzte zweite Drehrichtung, insbesondere relativ zu dem Gehäuse, zurückgedreht, dass eine Bewegung der Tür aus der zweiten Stellung unterbleibt oder die Tür in eine zwischen der ersten Stellung und der zweiten Stellung und näher an der zweiten Stellung als an der ersten Stellung liegende Zwischenstellung bewegt wird. Das Zurückdrehen des Betätigungselements erfolgt somit automatisch und zumindest nahezu ohne Bewegen der Tür, sodass die Tür zumindest nahezu in der zweiten Stellung verbleibt, das Federelement jedoch das Kupplungselement aus der Kuppelstellung in die Entkoppelstellung zurückbewegen, insbesondere zurückdrücken, kann. Dadurch kann eine besonders vorteilhafte Bewegbarkeit der Tür sichergestellt werden.

Ein dritter Aspekt der Erfindung betrifft eine Vorrichtung, mit einem Gehäuseelement, mit einer an dem Gehäuseelement gelenkig gehaltenen und relativ zu dem Gehäuseelement bewegbaren, insbesondere verschwenkbaren, Tür, und wenigstens einem erfindungsgemäßen Türantrieb gemäß dem ersten Aspekt der Erfindung, wobei die Tür mittels des Türantriebs antreibbar und dadurch relativ zu dem Gehäuse bewegbar ist. Vorteile und vorteilhafte Ausgestaltungen des ersten und zweiten Aspekts der Erfindung sind als Vorteile und vorteilhafte Ausgestaltungen des dritten Aspekts der Erfindung anzusehen und umgekehrt. Wie zuvor angedeutet, ist die Vorrichtung beispielsweise das zuvor genannte Gerät oder das zuvor genannte Möbelstück.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den durch die Ansprüche definierten Rahmen der Erfindung zu verlassen.

Die Zeichnung zeigt in:
- Fig. 1: eine schematische und teilweise geschnittene Seitenansicht eines erfindungsgemäßen Türantriebs gemäß einer ersten Ausführungsform für eine Tür;
- Fig. 2: ausschnittsweise eine schematische und teilweise geschnittene Seitenansicht des Türantriebs;
- Fig. 3: ausschnittsweise eine schematische Seitenansicht des Türantriebs;
- Fig. 4: ausschnittsweise eine weitere schematische Seitenansicht des Türantriebs; und
- Fig. 5: ausschnittsweise eine schematische Seitenansicht des Türantriebs gemäß einer zweiten Ausführungsform.

In den Fig. sind gleiche oder funktionsgleiche Elemente mit gleichen Bezugszeichen versehen.

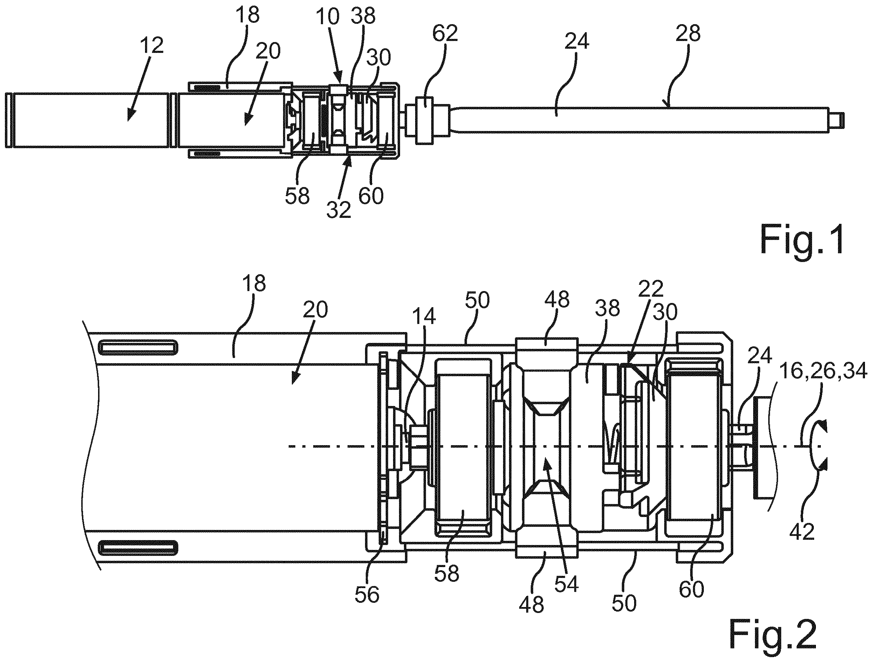

Fig. 1 zeigt in einer schematischen und teilweise geschnittenen Seitenansicht einen Türantrieb 10 für eine Tür einer Vorrichtung. Dies bedeutet, dass die Vorrichtung in ihrem vollständig hergestellten Zustand ein beispielsweise auch als Korpus bezeichnetes Gehäuseelement und die genannte Tür aufweist, die beispielsweise wenigstens ein Gelenk an das Gehäuseelement angelenkt und somit gelenkig an dem Gehäuseelement gehalten ist. Somit kann die Tür relativ zu dem Gehäuseelement bewegt, insbesondere gedreht, werden, während die Tür mit dem Gehäuseelement verbunden ist. Die Tür ist dabei zwischen einer ersten Stellung und einer zweiten Stellung relativ zu dem Gehäuse bewegbar. Das Gehäuseelement weist beispielsweise eine insbesondere als Durchgangsöffnung ausgebildete Öffnung auf. Die erste Stellung ist beispielsweise eine Schließstellung, in der zumindest ein Teilbereich der Öffnung mittels der Tür verdeckt und somit verschlossen ist. Die zweite Stellung ist beispielsweise eine Offenstellung, in welcher die Tür zumindest den Teilbereich freigibt. Dabei kann die Tür mittels des Türantriebs 10, insbesondere unter Nutzung von elektrischer Energie, relativ zu dem Gehäuseelement bewegt werden. Insbesondere kann die Tür mittels des Türantriebs 10 aus der ersten Stellung in die zweite Stellung relativ zu dem Gehäuseelement bewegt werden.

Hierzu weist der Türantrieb 10 einen vorzugsweise als Elektromotor ausgebildeten Antriebsmotor 12 und eine von dem Antriebsmotor 12 antreibbare und besonders gut aus Fig. 2 erkennbare Antriebswelle 14 auf, welche von dem Antriebsmotor 12 antreibbar und dadurch um eine Wellendrehachse 16 relativ zu dem Gehäuseelement drehbar ist. Der Türantrieb 10 weist dabei ein Gehäuse 18 auf, in welches die Antriebswelle 14 zumindest teilweise aufnehmbar ist. Dabei ist die Antriebswelle 14 um die Wellendrehachse 16 relativ zu dem Gehäuse 18 drehbar. Dem Antriebsmotor 12 ist beispielsweise ein Getriebe 20 zugeordnet, über welches die Antriebswelle 14 von dem Antriebsmotor 12 angetrieben werden kann. Der Türantrieb 10 weist darüber hinaus eine Kupplung 22 und eine Gewindespindel 24 auf, welche über die Kupplung 22 von der Antriebswelle 14 antreibbar und dadurch um eine Spindeldrehachse 26 relativ zu dem Gehäuse 18 drehbar ist. Fig. 1 bis 4 zeigen eine erste Ausführungsform, bei welcher die Spindeldrehachse 26 mit der Wellendrehachse 16 zusammenfällt. Dabei kann die Tür über die Gewindespindel 24 mittels des Antriebsmotors 12 angetrieben und somit relativ zu dem Gehäuseelement bewegt werden. Hierzu weist die Gewindespindel 24 ein erstes Gewinde 28 in Form eines Außengewindes auf.

In vollständig hergestelltem Zustand der Vorrichtung ist beispielsweise ein Schraubelement in Form einer Spindelmutter vorgesehen, welche auch einfach als Mutter bezeichnet wird. Die Spindelmutter weist ein mit dem Gewinde 28 korrespondierendes und als Innengewinde ausgebildetes zweites Gewinde auf, wobei die Gewindemutter über die Gewinde mit der Gewindespindel 24 verschraubt ist. Die Tür ist beispielsweise zumindest mittelbar und/oder gelenkig mit der Spindelmutter gekoppelt. Außerdem ist die Spindelmutter beispielsweise gegen eine relativ zu dem Gehäuse 18 erfolgende Drehung gesichert. Wird somit die Gewindespindel 24 von dem Antriebsmotor 12 angetrieben und somit um die Spindeldrehachse 26 relativ zu dem Gehäuse 18 gedreht, so wird dadurch die Gewindespindel 24 auch relativ zu der Spindelmutter gedreht. Da die Spindelmutter gegen relativ zu dem Gehäuse 18 und um die Spindeldrehachse 26 erfolgende Drehungen gesichert ist, dreht sich die Spindelmutter nicht mit der Gewindespindel 24 mit, sondern die Spindelmutter wird, insbesondere je nach Drehrichtung der Gewindespindel 24, entlang der Spindeldrehachse 26 relativ zu dem Gehäuse 18 translatorisch bewegt, das heißt verschoben. Hierdurch wird die Tür relativ zu dem Gehäuseelement bewegt, insbesondere verschwenkt.

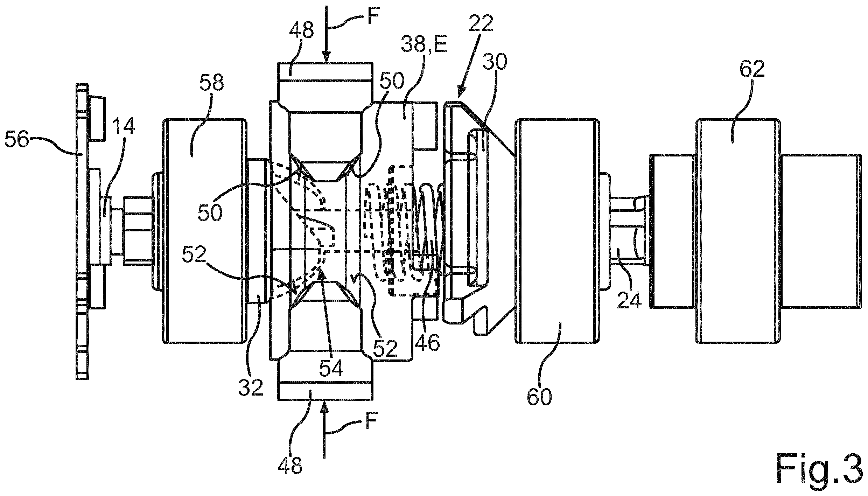

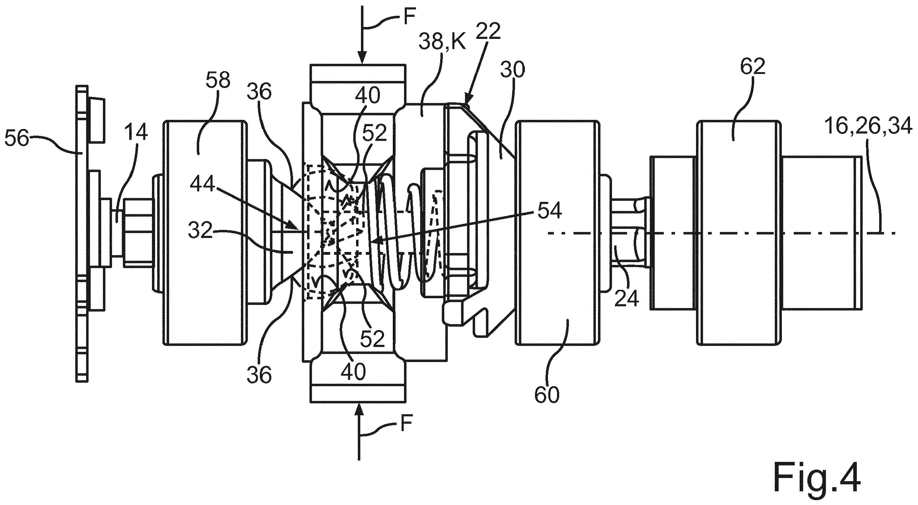

Um nun die Tür besonders vorteilhaft und insbesondere manuell bewegen zu können, weist die Kupplung 22 - wie besonders gut in Zusammenschau mit Fig. 3 und 4 erkennbar ist - ein Mitnehmerelement 30 auf, welches beispielsweise zumindest mittelbar drehfest mit der Gewindespindel 24 verbunden ist. Außerdem umfasst die Kupplung 22 ein Betätigungselement 32, welches durch Drehen der Antriebswelle 14 von der Antriebswelle 14 antreibbar und dadurch um eine Betätigungsdrehachse 34 relativ zu dem Gehäuse 18 drehbar ist. Dabei fällt vorliegend die Betätigungsdrehachse 34 mit der Wellendrehachse 16 und mit der Spindeldrehachse 26 zusammen. Außerdem weist das Betätigungselement 32 erste Betätigungsbereiche 36 auf, welche beispielsweise schräg zur Betätigungsdrehachse 34 verlaufen und/oder sich schraubenförmig um die Betätigungsdrehachse 34 winden. Daher wird das Betätigungselement 32 beispielsweise auch als Schraubenversteller bezeichnet.

Die Kupplung 22 weist darüber hinaus ein Kupplungselement 38 auf, welches mit den jeweiligen ersten Betätigungsbereichen 36 korrespondierende zweite Betätigungsbereiche 40 aufweist. Aus den Fig. ist erkennbar, dass das Mitnehmerelement 30 und das Kupplungselement 38 als Scheiben ausgebildet sind, sodass das Mitnehmerelement 30 auch als Mitnehmerscheibe und das Kupplungselement 38 auch als Kupplungsscheibe bezeichnet wird.

Das Kupplungselement 38 ist außerdem entlang der Betätigungsdrehachse 34 relativ zu dem Mitnehmerelement 30 und relativ zu dem Gehäuse 18 zwischen wenigstens einer in Fig. 3 dargestellten Entkoppelstellung E und wenigstens einer beispielsweise in Fig. 4 dargestellten Koppelstellung K translatorisch bewegbar und somit verschiebbar. In der Entkoppelstellung E ist das Kupplungselement 38 von dem Mitnehmerelement 30 entkoppelt, sodass keine Drehmomente zwischen dem Kupplungselement 38 und dem Mitnehmerelement 30 übertragen werden können. In der Koppelstellung K ist das Kupplungselement 38 mit dem Mitnehmerelement 30 drehmomentübertragend gekoppelt. Bei der in Fig. 1 bis 4 gezeigten ersten Ausführungsform sind das Kupplungselement 38 und das Mitnehmerelement 30 in der Koppelstellung K formschlüssig drehmomentübertragend miteinander verbunden, sodass um die Betätigungsdrehachse 34 verlaufende Drehmomente zwischen dem Kupplungselement 38 und dem Mitnehmerelement 30 übertragen werden können. Aus einer Zusammenschau von Fig. 3 und 4 ist besonders gut erkennbar, dass mittels der Betätigungsbereiche 36 und 40 eine durch Drehen der Antriebswelle 14 bewirkbare oder bewirkte Relativdrehung zwischen dem Betätigungselement 32 und dem Kupplungselement 38 in eine entlang der Betätigungsdrehachse 34, relativ zu dem Mitnehmerelement 30, relativ zu dem Betätigungselement 32, relativ zu dem Gehäuse und in Richtung des Mitnehmerelements 30 erfolgende, translatorische Bewegung beziehungsweise Verschiebung des Kupplungselements 38 aus der Entkoppelstellung E in die Koppelstellung K umwandelbar ist.

Dabei ist das sich in der Koppelstellung K befindende Kupplungselement 38 durch Drehen des Betätigungselements 32 antreibbar und dadurch mit dem Betätigungselement 32 um die Betätigungsdrehachse 34 relativ zu dem Gehäuse 18 mitdrehbar. Durch Drehen des sich in der Koppelstellung K befindenden Kupplungselements 38 ist das Mitnehmerelement 30 und über das Mitnehmerelement 30 die Gewindespindel 24 antreibbar und dadurch um die Spindeldrehachse 26 beziehungsweise die Betätigungsdrehachse 34 relativ zu dem Gehäuse 18 drehbar. Beispielsweise verlaufen die Betätigungsbereiche 36 und 40 in jeweiligen Ebenen, welche schräg zur Betätigungsdrehachse 34 verlaufen. Hierunter ist insbesondere zu verstehen, dass beispielsweise eine jeweilige, den jeweiligen Betätigungsbereich 36 beziehungsweise 40 tangierende Ebene schräg zu der Betätigungsdrehachse 34 verläuft. Dadurch resultiert beispielsweise aus einem Drehmoment, mittels welchem das Betätigungselement 32 um die Betätigungsdrehachse 34 relativ zu dem Gehäuse 18 gedreht wird, während sich das Kupplungselement 38 noch in der Entkoppelstellung E befindet, wenigstens eine Kraft oder Kraftkomponente, deren Wirkrichtung parallel zur Betätigungsdrehsachse 34 verläuft und in Richtung des Mitnehmerelements 30 weist. Mittels dieser Kraftkomponente wird das sich zunächst in der Entkoppelstellung E befindende Kupplungselement 38 aus der Entkoppelstellung E in die Koppelstellung K bewegt. Eine weitere Verschiebung des Kupplungselements 38 aus der Koppelstellung K von dem Betätigungselement 32 weg wird dadurch vermieden, dass das Kupplungselement 38 in einer von dem Betätigungselement 32 weg weisende und mit der Betätigungsdrehsachse 34 zusammenfallende oder parallel zu der Betätigungsdrehsachse 34 verlaufende Abstützrichtung zumindest mittelbar, insbesondere direkt, an dem Mitnehmerelement 30 abgestützt ist. Das Mitnehmerelement 30 verhindert somit weitere Verschiebungen des Kupplungselements 38 aus der Koppelstellung K von dem Betätigungselement 32 weg.

Die Betätigungsbereiche 36 und 40 überlappen sich bereits in der Entkoppelstellung E in um die Betätigungsdrehachse 34 verlaufender und beispielsweise in Fig. 2 durch einen Doppelpfeil 42 veranschaulichter Umfangsrichtung. Dabei begrenzen beispielsweise die Betätigungsbereiche 40 des Kupplungselements 38 eine Aufnahme 44, in die die Betätigungsbereiche 36 sowohl in der Entkoppelstellung E als auch in der Koppelstellung K eingreifen. Da sich das Kupplungselement 38 nicht weiter aus der Koppelstellung K von dem Betätigungselement 32 weg verschieben kann, wird das sich in der Koppelstellung K befindende Kupplungselement 38 dann, wenn das Betätigungselement 32 um die Betätigungsdrehsachse 34 relativ zu dem Gehäuse 18 gedreht wird, während sich das Kupplungselement 38 in der Koppelstellung K befindet, mit dem Betätigungselement 32 mitgedreht und somit um die Betätigungsdrehachse 34 relativ zu dem Gehäuse 18 gedreht. In der Folge werden auch das Mitnehmerelement 30 und über dieses die Gewindespindel 24 um die Betätigungsdrehachse 34 relativ zu dem Gehäuse 18 gedreht, wodurch die Tür relativ zu dem Gehäuseelement bewegt wird.

Besonders gut aus Fig. 3 ist erkennbar, dass der Türantrieb 10 ein als mechanische Feder ausgebildetes Federelement 46 aufweist, welches entlang der Betätigungsdrehachse 34 einerseits zumindest mittelbar, insbesondere direkt, an dem Kupplungselement 38 und andererseits zumindest mittelbar, insbesondere direkt, an dem Mitnehmerelement 30 abgestützt ist. Durch Bewegen des Kupplungselements 38 aus der Entkoppelstellung E in die Koppelstellung K wird das Federelement 46 bespannt, insbesondere komprimiert. Dadurch stellt das Federelement 46 zumindest in der Koppelstellung K eine Federkraft bereit, welche entlang der Betätigungsdrehachse zumindest mittelbar auf das Kupplungselement 38 wirkt. Insbesondere mittels des zuvor genannten, auf das Betätigungselement 32 ausgeübten Drehmoments wird das Kupplungselement 38 entgegen der Federkraft in der Koppelstellung K gehalten. Wird das Ausüben des Drehmoments auf das Betätigungselement 32 beendet, so kann sich beispielsweise das Federelement 46 zumindest teilweise entspannen. In der Folge wird das Kupplungselement 38 mittels des Federelements 46, das heißt mittels der von dem Federelement 46 bereitgestellten Federkraft, aus der Koppelstellung K in die Entkoppelstellung E zurückbewegt, insbesondere zurückgedrückt. Da die Bewegung des Kupplungselements 38 aus der Koppelstellung K in die Entkoppelstellung E auch als Öffnen der Kupplung 22 bezeichnet wird, wird das Federelement 46 auch als Öffnungsfeder bezeichnet.

Um die Relativdrehung zwischen dem sich zunächst in der Entkoppelstellung E befindenden Kupplungselement 38 und dem Betätigungselement 32 und die daraus resultierende Verschiebung des Kupplungselements 38 aus der Entkoppelstellung E in die Koppelstellung K sicherzustellen, weist der Türantrieb 10 separat von dem Kupplungselement 38 und separat von dem Gehäuse 18 ausgebildete, auch als Bremsbacken bezeichnete Bremselemente 48 auf. Das jeweilige Bremselement 48 ist gegen eine um die Betätigungsdrehachse 34 und relativ zu dem Gehäuse 18 erfolgende Drehung gesichert. Hierzu ist beispielsweise das jeweilige Bremselement 48 über eine beispielsweise als Blattfeder ausgebildete und aus Fig. 2 erkennbare Feder 51 mit dem Gehäuse 18 gekoppelt, insbesondere derart, dass die jeweilige Feder 51 das jeweilige Bremselement 48 gegen eine um die Betätigungsdrehachse 34 und relativ zu dem Gehäuse 18 erfolgende Drehung sichert. Die jeweilige, vorzugsweise als Blattfeder ausgebildete Feder 51 stellt jedoch eine aus Fig. 3 erkennbare und insbesondere als Federkraft ausgebildete Kraft F bereit, welche schräg oder vorzugsweise senkrecht zur Betätigungsdrehachse 34 und dabei in Richtung des Kupplungselements 38 wirkt. Mittels der jeweiligen Kraft F wird das jeweilige Bremselement 48 in, insbesondere direktem, Kontakt mit dem Kupplungselement 38 gehalten. Hierdurch wird das Kupplungselement 38 bezüglich dessen relativ zu dem Gehäuse 18 erfolgender Drehung gegen das Gehäuse 18 mittels des jeweiligen Bremselements 48 abgebremst.

Das jeweilige Bremselement 48 weist wenigstens eine oder aber mehrere, konische erste Flächen 50 auf. Das Kupplungselement 38 weist wenigstens eine oder aber mehrere, konische zweite Flächen 52 auf. Die jeweilige erste konische Fläche 50 liegt dabei direkt an der jeweiligen zweiten konischen Fläche 52 an, sodass sich die jeweiligen konischen Flächen 50 und 52 direkt gegenseitig berühren. Die konischen Flächen 50 und 52 wirken somit als Reibkonusse, mittels welchen einerseits eine vorteilhafte Abbremsung des Kupplungselements 38 hinsichtlich dessen um die Betätigungsdrehachse 34 relativ zu dem Gehäuse 18 erfolgender Drehung realisierbar ist. Andererseits kann durch die Verwendung der Reibkonusse ein übermäßiges Abbremsen des Kupplungselements 38 hinsichtlich dessen entlang der Betätigungsdrehachse 34 verlaufender und relativ zu dem Gehäuse 18 erfolgender Verschiebung vermieden werden. Somit kann einerseits eine gewünschte Relativdrehung zwischen dem Betätigungselement 32 und dem Kupplungselement 38 gewährleistet werden. Andererseits kann vermieden werden, dass die Bremselemente 48 beziehungsweise die durch die Bremselemente 48 bereitgestellte Bremsung des Kupplungselements 38 der Verschiebung des Kupplungselements 38 zwischen der Entkoppelstellung E und der Koppelstellung K übermäßig entgegensteht. Dabei ist das jeweilige Bremselement 48 entlang der Betätigungsdrehachse 34 mit dem Kupplungselement 38 relativ zu dem Gehäuse 18 mitverschiebbar. Hierbei gleitet beispielsweise das jeweilige Bremselement 48 an der jeweiligen Feder 51 ab und entlang der jeweiligen Feder 51.

Aus Fig. 4 ist erkennbar, dass die konischen Flächen 52 des Kupplungselements 38 eine beispielsweise als Nut, insbesondere als Ringnut, ausgebildete Ausnehmung 54 begrenzen, welche sich beispielsweise in Umfangsrichtung des Kupplungselements 38 vollständig umlaufend und somit unterbrechungsfrei erstreckt. Dabei greifen die Bremselemente 48 in die Ausnehmung 54 ein, derart, dass die konischen Flächen 50 in der Ausnehmung 54 angeordnet sind und somit in die Ausnehmung 54 eingreifen. Aus den Fig. ist außerdem ein Motorflansch 56 erkennbar, über welchen beispielsweise der Antriebsmotor 12 sowie gegebenenfalls das Getriebe 20 mit dem Gehäuse 18 verbunden und insbesondere drehfest an dem Gehäuse 18 abgestützt oder festgelegt sind. Außerdem sind in axialer Richtung des Antriebsmotors 12 voneinander beabstandete und beispielsweise als Wälzlager ausgebildete Lager 58 und 60 vorgesehen, wobei in axialer Richtung zwischen den Lagern 58 und 60 das Kupplungselement 38 und das Mitnehmerelement 30 angeordnet sind. Mittels der Lager 58 und 60 ist beispielsweise die Kupplung 22 insbesondere in radialer Richtung und in axialer Richtung an dem Gehäuse 18 gelagert. Insbesondere begrenzen die Lager 58 und 60 eine beziehungsweise die Bewegung des Kupplungselements 38 entlang der Betätigungsdrehachse 34 in Richtung des Betätigungselements 32 beziehungsweise des Antriebsmotors 12 sowie in entgegengesetzter Richtung und somit in Richtung des Mitnehmerelements 30 beziehungsweise der Gewindespindel 24.

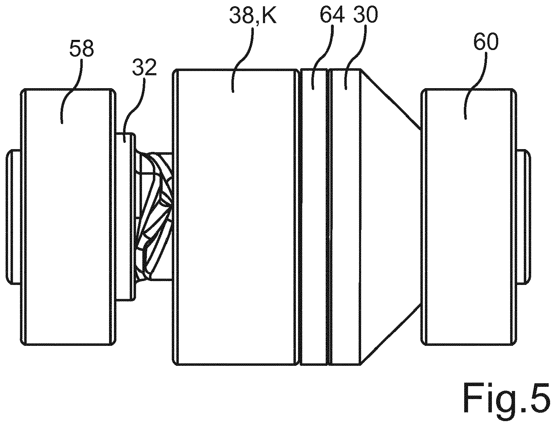

Aus Fig. 3 ist erkennbar, dass der Türantrieb 10 darüber hinaus ein als Spindellager fungierendes, weiteres Lager 62 aufweist, mittels welchem beispielsweise die Gewindespindel 24 in radialer Richtung und/oder in axialer Richtung an dem Gehäuse 18 gelagert ist. Während bei der in Fig. 1 bis 4 gezeigten ersten Ausführungsform das Mitnehmerelement 30 und das Kupplungselement 38 in der Koppelstellung K formschlüssig zusammenwirken und somit formschlüssig drehmomentübertragend miteinander gekoppelt sind, zeigt Fig. 5 eine zweite Ausführungsform, bei welcher das Mitnehmerelement 30 und das Kupplungselement 38 in der Koppelstellung K, insbesondere ausschließlich, kraft- beziehungsweise reibschlüssig zusammenwirken und somit, insbesondere ausschließlich, reibschlüssig beziehungsweise kraftschlüssig drehmomentübertragend miteinander gekoppelt sind. Hierzu ist beispielsweise ein Kupplungsreibbelag 64 vorgesehen, welcher beispielsweise an dem Mitnehmerelement 30 oder aber an dem Kupplungselement 38 gehalten ist. Mittels des Kupplungsreibbelags 64 können besonders hohe Drehmomente in der Koppelstellung K zwischen dem Mitnehmerelement 30 und dem Kupplungselement 38 übertragen werden.

Um beispielsweise die Tür aus der ersten Stellung in die zweite Stellung zu bewegen, wird beispielsweise das Betätigungselement 32 um die Betätigungsdrehachse 34 in eine erste Drehrichtung mittels des Antriebsmotors 12 gedreht. Dies wird beispielsweise durch eine entsprechende Bedienung eines menschlichen Nutzers, das heißt einer Person, bewirkt, das heißt initiiert oder veranlasst. Um beispielsweise sicherzustellen, dass die Öffnungsfeder das Kupplungselement 38 aus der Koppelstellung K in die Entkoppelstellung E zurückschieben, insbesondere zurückdrücken, kann, nachdem die Tür in die zweite Stellung bewegt wurde, wird beispielsweise das Betätigungselement 32 mittels des Antriebsmotors 12 automatisch, das heißt ohne eine durch eine Person bewirkte Bedienung des Türantriebs 10 das Betätigungselement 32 in eine der ersten Drehrichtung entgegengesetzte zweite Drehrichtung um die Betätigungsdrehachse 34 relativ zu dem Gehäuse 18 gedreht und somit zurückgedreht, nachdem die Tür in die zweite Stellung bewegt wurde und ohne dass die Tür, insbesondere übermäßig, aus der zweiten Stellung herausbewegt wird. In der Folge kann das Kupplungselement 38 sicher in die Entkoppelstellung E bewegt werden, woraufhin beispielsweise die Person die Tür manuell verschwenken kann, ohne dabei den Antriebsmotor 12 anzutreiben. In der Folge kann eine besonders vorteilhafte Bewegung beziehungsweise Betätigung der Tür gewährleistet werden.

## Patentansprüche

1. Türantrieb (10) für eine Tür, mit einem Antriebsmotor (12), mit einer von dem Antriebsmotor (12) antreibbaren und dadurch drehbaren Antriebswelle (14), mit einer Kupplung (22), und mit einer Gewindespindel (24), welche über die Kupplung (22) von der Antriebswelle (14) antreibbar und dadurch drehbar ist, wobei die Kupplung (22) ein Mitnehmerelement (30) und ein Betätigungselement (32) aufweist, welches durch Drehen der Antriebswelle (14) von der Antriebswelle (14) antreibbar und dadurch um eine Betätigungsdrehachse (34) drehbar ist, **dadurch gekennzeichnet, dass** das Betätigungselement (32) wenigstens einen ersten Betätigungsbereich (36) aufweist, und dass die Kupplung (22) -ein Kupplungselement (38) aufweist, welches wenigstens einen mit dem ersten Betätigungsbereich (36) korrespondierenden zweiten Betätigungsbereich (40) aufweist und entlang der Betätigungsdrehachse (34) relativ zu dem Mitnehmerelement (30) zwischen wenigstens einer Entkoppelstellung (E), in welcher das Kupplungselement (38) von dem Mitnehmerelement (30) entkoppelt ist, und wenigstens einer Koppelstellung (K) translatorisch bewegbar ist, in welcher das Kupplungselement (38) mit dem Mitnehmerelement (30) gekoppelt ist, wobei mittels der Betätigungsbereiche (38, 40) eine durch Drehen der Antriebswelle (12) bewirkbare Relativdrehung zwischen dem Betätigungselement (32) und dem Kupplungselement (38) in eine entlang der Betätigungsdrehachse (34), relativ zu dem Mitnehmerelement (30), relativ zu dem Betätigungselement (32) und in Richtung des Mitnehmerelements (30) erfolgende, translatorische Bewegung des Kupplungselements (38) aus der Entkoppelstellung (E) in die Koppelstellung (K) umwandelbar ist.

2. Türantrieb (10) nach Anspruch 1, **dadurch gekennzeichnet, dass** das sich in der Koppelstellung (K) befindende Kupplungselement (38) durch Drehen des Betätigungselements (32) antreibbar und dadurch mit dem Betätigungselement (32) mitdrehbar ist, wobei durch Drehen des sich in der Koppstellung (K) befindenden Kupplungselements (38) das Mitnehmerelement (30) und über das Mitnehmerelement (30) die Gewindespindel (24) von dem Kupplungselement (38) antreibbar und dadurch drehbar sind.

3. Türantrieb (10) nach Anspruch 1 oder 2,
**dadurch gekennzeichnet, dass**
die Betätigungsbereiche (38, 40) in einer jeweiligen Ebene verlaufen, welche schräg zur Betätigungsdrehachse (34) verläuft.

4. Türantrieb (10) nach einem der vorhergehenden Ansprüche,
**dadurch gekennzeichnet, dass**
sich die Betätigungsbereiche (38, 40) in der Entkoppelstellung (E) in um die Betätigungsdrehachse (34) verlaufender Umfangsrichtung (42) gegenseitig überlappen.

5. Türantrieb (10) nach einem der vorhergehenden Ansprüche,
**dadurch gekennzeichnet, dass**
einer der Betätigungsbereiche (38, 40) eine Aufnahme (44) zumindest teilweise begrenzt, in welche der andere Betätigungsbereich (40, 38) zumindest in der Entkoppelstellung (E) eingreift.

6. Türantrieb (10) nach einem der vorhergehenden Ansprüche,
**gekennzeichnet durch**
wenigstens ein Federelement (46), welches durch Bewegen des Kupplungselements (38) aus der Entkoppelstellung (E) in die Koppelstellung (K) zu spannen ist und dadurch zumindest in der Koppelstellung (K) eine zumindest mittelbar auf das Kupplungselement (38) wirkende Federkraft bereitstellt, mittels welcher eine Bewegung des Kupplungselements (38) aus der Koppelstellung (K) in die Entkoppelstellung (E) bewirkbar ist.

7. Türantrieb (10) nach einem der vorhergehenden Ansprüche,
**dadurch gekennzeichnet, dass**
ein Gehäuse (18) vorgesehen ist, wobei das Kupplungselement (38) relativ zu dem Gehäuse (18) drehbar und zwischen der Koppelstellung (K) und der Entkoppelstellung (E) translatorisch bewegbar ist, wobei wenigstens ein separat von dem Kupplungselement (38) ausgebildetes Bremselement (48) vorgesehen ist, mittels welchem das Kupplungselement (38) zumindest bezüglich dessen relativ zu dem Gehäuse (18) erfolgender Drehung gegen das Gehäuse (18) abbremsbar ist.

8. Türantrieb (10) nach Anspruch 7,
**dadurch gekennzeichnet, dass**
zumindest eine erste Fläche (50) des Bremselements (48) zumindest eine zweite Fläche (52) des Kupplungselements (38) direkt berührt.

9. Türantrieb (10) nach Anspruch 8,
**dadurch gekennzeichnet, dass**
die Flächen (50, 52) konisch ausgebildet sind und/oder sich in einer jeweiligen, schräg zur Betätigungsdrehachse (34) verlaufenden Ebene erstrecken.

10. Türantrieb (10) nach Anspruch 8 oder 9,
**dadurch gekennzeichnet, dass**
eine der Flächen (50, 52) eine Ausnehmung (54) zumindest teilweise begrenzt, in welche die andere Fläche (52, 50) eingreift.

11. Türantrieb (10) nach einem der Ansprüche 7 bis 10,
**dadurch gekennzeichnet, dass**
das Bremselement (48) aus einem ersten Werkstoff, insbesondere aus einem Kunststoff, vorzugsweise aus einem faserverstärkten Kunststoff, und das Kupplungselement (38) aus einem von dem ersten Werkstoff unterschiedlichen zweiten Werkstoff, insbesondere aus einem metallischen Werkstoff, gebildet ist.

12. Türantrieb (10) nach einem der vorhergehenden Ansprüche,
**dadurch gekennzeichnet, dass**
das Kupplungselement (38) und das Mitnehmerelement (30) in der Koppelstellung (K) formschlüssig und/oder kraftschlüssig zusammenwirken und dadurch miteinander gekoppelt sind.

13. Verfahren zum Betreiben eines Türantriebs (10) für eine Tür, bei welchem die Tür mittels des Türantriebs (10) angetrieben und dadurch relativ zu einem Gehäuseelement aus einer ersten Stellung in eine zweite Stellung bewegt wird, wobei der Türantrieb (10) aufweist:
- einen Antriebsmotor (12),
- eine Antriebswelle (14), welche beim Antreiben der Tür von dem Antriebsmotor (12) angetrieben und dadurch gedreht wird,
- eine Kupplung (22), und
- eine Gewindespindel (24), welche beim Antreiben der Tür über die Kupplung (22) von der Antriebswelle (14) angetrieben und dadurch gedreht wird, wodurch die Tür über die Gewindespindel (24), die Kupplung (22) und die Antriebswelle (12) von dem Antriebsmotor (12) angetrieben wird,
**dadurch gekennzeichnet, dass**
die Kupplung (22) aufweist:
- ein Mitnehmerelement (30),
- ein Betätigungselement, (32) welches durch das Drehen der Antriebswelle (12) von der Antriebswelle (12) angetrieben und dadurch um eine Betätigungsdrehachse (34) gedreht wird und wenigstens einen ersten Betätigungsbereich (36) aufweist, und
- ein Kupplungselement (38), welches wenigstens einen mit dem ersten Betätigungsbereich (36) korrespondierenden zweiten Betätigungsbereich (40) aufweist und entlang der Betätigungsdrehachse (34) relativ zu dem Mitnehmerelement (30) zwischen wenigstens einer Entkoppelstellung (E) , in welcher das Kupplungselement (38) von dem Mitnehmerelement (30) entkoppelt ist, und wenigstens einer Koppelstellung (K) translatorisch bewegbar ist, in welcher das Kupplungselement (38) mit dem Mitnehmerelement (30) gekoppelt ist, wobei mittels der Betätigungsbereiche (36, 40) eine durch Drehen der Antriebswelle (12) bewirkte Relativdrehung zwischen dem Betätigungselement (32) und dem Kupplungselement (38) in eine entlang der Betätigungsdrehachse(34) , relativ zu dem Mitnehmerelement (30), relativ zu dem Betätigungselement (32) und in Richtung des Mitnehmerelements (30) erfolgende, translatorische Bewegung des Kupplungselement (38) aus der Entkoppelstellung (E) in die Koppelstellung (K) umgewandelt wird.

14. Verfahren nach Anspruch 13,
**dadurch gekennzeichnet, dass**
zum Bewegen der Tür in die zweite Stellung das Betätigungselement (32) über die Antriebswelle (14) mittels des Antriebsmotors (12) in eine erste Drehrichtung gedreht wird, wobei nach dem Bewegen der Tür in die zweite Stellung das Betätigungselement (32) über die Antriebswelle (14) mittels des Antriebsmotors (12), insbesondere automatisch, derart ein Stück in eine der ersten Drehrichtung entgegengesetzte zweite Drehrichtung zurückgedreht wird, dass eine Bewegung der Tür aus der zweiten Stellung unterbleibt oder die Tür in eine zwischen der ersten Stellung und der zweiten Stellung und näher an der zweiten Stellung als an der ersten Stellung liegende Zwischenstellung bewegt wird.

15. Vorrichtung, mit einem Gehäuseelement, mit einer an dem Gehäuseelement gelenkig gehaltenen und relativ zu dem Gehäuseelement bewegbaren Tür, und mit wenigstens einem Türantrieb (10) nach einem der Ansprüche 1 bis 12, wobei die Tür mittels des Türantriebs antreibbar und dadurch relativ zu dem Gehäuseelement bewegbar ist.

## Claims

1. A door drive (10) for a door, with a drive motor (12), with a drive shaft (14), which is drivable by the drive motor (12) and thereby rotatable, with a clutch (22), and with a threaded spindle (24), which is drivable by the drive shaft (14) via the clutch (22) and thereby rotatable,
wherein the clutch (22) comprises a catch element (30) and an actuation element (32), which is drivable by the drive shaft (14) by rotating the drive shaft (14) and thereby rotatable around an actuation rotational axis (34), **characterized in that** the actuation element (32) comprises at least one first actuation area (36), and that the clutch (22) comprises a clutch element (38), which comprises at least one second actuation area (40) corresponding with the first actuation area (36) and is translationally movable along the actuation rotational axis (34) in relation to the catch element (30) between at least one decoupling position (E), in which the clutch element (38) is decoupled from the catch element (30), and at least one coupling position (K), in which the clutch element (38) is coupled to the catch element (30), wherein a relative rotation, which can be effected by rotating the drive shaft (12), between the actuation element (32) and the clutch element (38) can be converted into a translational movement of the clutch element (38) from the decoupling position (E) into the coupling position (K) by means of the actuation areas (38, 40), which is effected along the actuation rotational axis (34), in relation to the catch element (30), in relation to the actuation element (32) and towards the catch element (30).

2. The door drive (10) according to claim 1,
**characterized in that**
the clutch element (38) being in the coupling position (K) is drivable by rotating the actuation element (32) and thereby rotatable together with the actuation element (32), wherein the catch element (30) and the threaded spindle (24), via the catch element (30), are drivable by the clutch element (38) and thereby rotatable by rotating the clutch element (38) being in the coupling position (K).

3. The door drive (10) according to claim 1 or 2,
**characterized in that**
the actuation areas (38, 40) extend in a respective plane, which extends obliquely to the actuation rotational axis (34).

4. The door drive (10) according to any one of the preceding claims,
**characterized in that**
in the decoupling position (E), the actuation areas (38, 40) mutually overlap in circumferential direction (42) extending around the actuation rotational axis (34).

5. The door drive (10) according to any one of the preceding claims,
**characterized in that**
one of the actuation areas (38, 40) at least partially delimits a receptacle (44), with which the other actuation area (40, 38) engages at least in the decoupling position (E).

6. The door drive (10) according to any one of the preceding claims,
**characterized by**
at least one spring element (46), which can be tensioned by moving the clutch element (38) from the decoupling position (E) into the coupling position (K) and thereby provides a spring force at least indirectly acting on the clutch element (38) at least in the coupling position (K), by means of which a movement of the clutch element (38) from the coupling position (K) into the decoupling position (E) can be effected.

7. The door drive (10) according to any one of the preceding claims,
**characterized in that**
a housing (18) is provided, wherein the clutch element (38) is rotatable in relation to the housing (18) and is translationally movable between the coupling position (K) and the decoupling position (E), wherein at least one braking element (48) formed separately from the clutch element (38) is provided, by means of which the clutch element (38) can be decelerated against the housing (18) at least with respect to the rotation thereof effected in relation to the housing (18).

8. The door drive (10) according to claim 7,
**characterized in that**
at least one first surface (50) of the braking element (48) directly contacts at least one second surface (52) of the clutch element (38).

9. The door drive (10) according to claim 8,
**characterized in that**
the surfaces (50, 52) are conically formed and/or extend in a respective plane extending obliquely to the actuation rotational axis (34).

10. The door drive (10) according to claim 8 or 9,
**characterized in that**
one of the surfaces (50, 52) at least partially delimits a recess (54), with which the other surface (52, 50) engages.

11. The door drive (10) according to any one of claims 7 to 10,
**characterized in that**
the braking element (48) is formed of a first material, in particular of a plastic, preferably of a fiber-reinforced plastic, and the clutch element (38) is formed of a second material different from the first material, in particular of a metallic material.

12. The door drive (10) according to any one of the preceding claims,
**characterized in that**
in the coupling position (K), the clutch element (38) and the catch element (30) cooperate in form-fit and/or force-fit manner and are thereby coupled to each other.

13. A method for operating a door drive (10) for a door, in which the door is driven by means of the door drive (10) and thereby moved from a first position into a second position in relation to a housing element, wherein the door drive (10) comprises:
- a drive motor (12),
- a drive shaft (14), which is driven by the drive motor (12) and thereby rotated upon driving the door,
- a clutch (22), and
- a threaded spindle (24), which is driven by the drive shaft (14) via the clutch (22) and thereby rotated upon driving the door, whereby the door is driven by the drive motor (12) via the threaded spindle (24), the clutch (22) and the drive shaft (12),
**characterized in that**
the clutch (22) comprises:
- a catch element (30),
- an actuation element (32), which is driven by the drive shaft (12) by rotating the drive shaft (12) and thereby rotated around an actuation rotational axis (34) and comprises at least one first actuation area (36), and
- a clutch element (38), which comprises at least one second actuation area (40) corresponding with the first actuation area (36) and is translationally movable along the actuation rotational axis (34) in relation to the catch element (30) between at least one decoupling position (E), in which the clutch element (38) is decoupled from the catch element (30), and at least one coupling position (K), in which the clutch element (38) is coupled to the catch element (30), wherein a relative rotation, which can be effected by rotating the drive shaft (12), between the actuation element (32) and the clutch element (38) can be converted into a translational movement of the clutch element (38) from the decoupling position (E) into the coupling position (K) by means of the actuation areas (38, 40), which is effected along the actuation rotational axis (34), in relation to the catch element (30), in relation to the actuation element (32) and towards the catch element (30).

14. The method according to claim 13,
**characterized in that**
for moving the door into the second position, the actuation element (32) is rotated into a first rotational direction by means of the drive motor (12) via the drive shaft (14), wherein after moving the door into the second position, the actuation element (32) is, in particular automatically, rotated back a bit into a second rotational direction opposite to the first rotational direction by means of the drive motor (12) via the drive shaft (14) such that a movement of the door from the second position is omitted or the door is moved into an intermediate position located between the first position and the second position and located closer to the second position than to the first position.

15. A device with a housing element, with a door pivotably supported on the housing element and movable in relation to the housing element, and with at least one door drive (10) according to any one of claims 1 to 12, wherein the door is drivable by means of the door drive and thereby movable in relation to the housing element.

## Revendications

1. Entraînement de porte (10), avec un moteur d'entraînement (12), avec un arbre d'entraînement (14), pouvant être entraîné par le moteur d'entraînement (12), et pouvant ainsi tourner, avec un couplage (22), et avec une broche filetée (24), qui peut être entraînée par l'arbre d'entraînement (14) via le couplage (22), et peut ainsi tourner,
dans lequel le couplage (22) comporte un élément d'entraîneur (30) et un élément d'actionnement (32), qui peut être entraîné par l'arbre d'entraînement (14) en faisant tourner l'arbre d'entraînement (14), et peut ainsi tourner autour d'un axe de rotation d'actionnement (34),
**caractérisé en ce que** l'élément d'actionnement (32) comporte au moins une première zone d'actionnement (36), et que le couplage (22) comporte un élément de couplage (38), qui comporte au moins une seconde zone d'actionnement (40) correspondant à la première zone d'actionnement (36), et est mobile en translation le long de l'axe de rotation d'actionnement (34) par rapport à l'élément d'entraîneur (30), entre au moins une position de découplage (E), dans laquelle l'élément de couplage (38) est découplé de l'élément d'entraîneur (30), et au moins une position de couplage (K), dans laquelle l'élément de couplage (38) est couplé à l'élément d'entraîneur (30), dans lequel, au moyen des zones d'actionnement (38, 40), une rotation relative entre l'élément d'actionnement (32) et l'élément de couplage (38), pouvant être provoquée par la rotation de l'arbre d'entraînement (12), peut être transformée en un mouvement de translation de l'élément de couplage (38), s'effectuant le long de l'axe de rotation d'actionnement (34), par rapport à l'élément d'entraîneur (30), par rapport à l'élément d'actionnement (32), et en direction de l'élément d'entraîneur (30), de la position de découplage (E) à la position de couplage (K).

2. Entraînement de porte (10) selon la revendication 1,
**caractérisé en ce que**
l'élément de couplage (38) se trouvant dans la position de couplage (K) peut être entraîné par rotation de l'élément d'actionnement (32), et peut ainsi tourner avec l'élément d'actionnement (32), dans lequel, par rotation de l'élément de couplage (38), se trouvant dans la position de couplage (K), l'élément d'entraîneur (30) et la broche filetée (24), via l'élément d'entraîneur (30), peuvent être entraînés par l'élément de couplage (38), et peuvent ainsi tourner.

3. Entraînement de porte (10) selon la revendication 1 ou 2,
**caractérisé en ce que**
les zones d'actionnement (38, 40) s'étendent dans un plan respectif qui s'étend obliquement par rapport à l'axe de rotation d'actionnement (34).

4. Entraînement de porte (10) selon l'une quelconque des revendications précédentes,
**caractérisé en ce que**
les zones d'actionnement (38, 40), dans la position de découplage (E), dans la direction circonférentielle (42) s'étendant autour de l'axe de rotation d'actionnement (34) se chevauchent mutuellement.

5. Entraînement de porte (10) selon l'une quelconque des revendications précédentes,
**caractérisé en ce que**
une des zones d'actionnement (38, 40) délimite un logement (44) au moins partiellement, dans lequel l'autre zone d'actionnement (40, 38) s'engage au moins dans la position de découplage (E).

6. Entraînement de porte (10) selon l'une quelconque des revendications précédentes,
**caractérisé par**
au moins un élément de ressort (46), qui doit être serré de la position de découplage (E) dans la position de couplage (K) par mouvement de l'élément de couplage (38), et ainsi fournit, au moins dans la position de couplage (K), une force de ressort agissant au moins indirectement sur l'élément de couplage (38), par l'intermédiaire de laquelle un mouvement de l'élément de couplage (38) de la position de couplage (K) à la position de découplage (E) peut être effectué.

7. Entraînement de porte (10) selon l'une quelconque des revendications précédentes
**caractérisé en ce que**
un boîtier (18) est prévu, dans lequel l'élément de couplage (38) peut être tourné par rapport au boîtier (18), et est mobile en translation entre la position de couplage (K) et la position de découplage (E), dans lequel au moins un élément de freinage (48), formé séparément de l'élément de couplage (38), est prévu, par l'intermédiaire duquel l'élément de couplage (38) peut être freiné contre le boîtier (18), au moins en ce qui concerne sa rotation par rapport au boîtier (18).

8. Entraînement de porte (10) selon la revendication 7,
**caractérisé en ce que**
au moins une première surface (50) de l'élément de freinage (48) touche directement au moins une seconde surface (52) de l'élément de couplage (38).

9. Entraînement de porte (10) selon la revendication 8,
**caractérisé en ce que**
les surfaces (50, 52) ont une forme conique et / ou s'étendent dans plan respectif incliné par rapport à l'axe de rotation d'actionnement (34).

10. Entraînement de porte (10) selon la revendication 8 ou 9,
**caractérisé en ce que**
une des surfaces (50, 52) délimite au moins partiellement une évidement (54), dans laquelle l'autre surface (50, 52) s'engage.

11. Entraînement de porte (10) selon l'une quelconque des revendications 7 à 10,
**caractérisé en ce que**
l'élément de freinage (48) est formé d'un premier matériau, surtout d'une matière plastique, de préférence, d'une matière plastique renforcée de fibres, et l'élément de couplage (38) est formé d'un second matériau différent du premier matériau, surtout d'un matériau métallique.

12. Entraînement de porte (10) selon l'une quelconque des revendications précédentes,
**caractérisé en ce que**
l'élément de couplage (38) et l'élément d'entraîneur (30) coopèrent à engagement positif et / ou par adhérence dans la position de couplage (K), et sont ainsi couplés entre eux.

13. Procédé de fonctionnement d'un entraînement de porte (10) pour une porte, dans lequel la porte est entraînée par l'intermédiaire de l'entraînement de porte (10), et est ainsi déplacée par rapport à un élément de boîtier d'une première position à une seconde position, dans lequel l'entraînement de porte (10) comporte :
- un moteur d'entraînement (12)
- un arbre d'entraînement (14), qui est entraîné par le moteur d'entraînement (12) lors de l'entraînement de la porte et est ainsi tourné,
- un couplage (22), et
- une broche filetée (24), qui, lors de l'entraînement de la porte, est entraînée par l'arbre d'entraînement (14) via le couplage (22) et est ainsi tournée, ce qui permet à la porte d'être entraînée par le moteur d'entraînement (12) via la broche filetée (24), le couplage (22), et l'arbre d'entraînement (14),
**caractérisé en ce que**
le couplage (22) comporte :
- un élément d'entraîneur (30),
- un élément d'actionnement (32), qui est entraîné par l'arbre d'entraînement (12) moyennant la rotation de l'arbre d'entraînement (12) , et est ainsi tourné autour d'un axe de rotation d'actionnement (34), et comporte au moins une première zone d'actionnement (36), et
- un élément de couplage (38), qui comporte au moins une seconde zone d'actionnement (40) correspondant à la première zone d'actionnement (36), et est mobile en translation le long de l'axe de rotation d'actionnement (34) par rapport à l'élément d'entraîneur (30), entre au moins une position de découplage (E), dans laquelle l'élément de couplage (38) est découplé de l'élément d'entraîneur (30), et au moins une position de couplage (K), dans laquelle l'élément de couplage (38) est couplé à l'élément d'entraîneur (30), dans lequel, au moyen des zones d'actionnement (36, 40), une rotation relative entre l'élément d'actionnement (32) et l'élément de couplage (38) étant provoquée par la rotation de l'arbre d'entraînement (12), est transformée en un mouvement de translation de l'élément de couplage (38), s'effectuant le long de l'axe de rotation d'actionnement (34), par rapport à l'élément d'entraîneur (30), par rapport à l'élément d'actionnement (32), et en direction de l'élément d'entraîneur (30), de la position de découplage (E) à la position de couplage (K).

14. Procédé selon la revendication 13,
**caractérisé en ce que**
pour déplacer la porte dans la seconde position, l'élément d'actionnement (32) est tourné dans un premier sens de rotation par l'intermédiaire de l'arbre d'entraînement (14) au moyen du moteur d'entraînement (12), dans lequel, après le mouvement de la porte dans la seconde position, l'élément d'actionnement (32) est tourné un peu en arrière par l'intermédiaire de l'arbre d'entraînement (14) au moyen du moteur d'entraînement (30), surtout automatiquement, dans un deuxième sens de rotation, opposé au premier sens de rotation, de telle sorte qu'un mouvement de la porte à partir de la seconde position est empêché, ou que la porte est déplacée dans une position intermédiaire, qui est située entre la première et la seconde position, et plus proche de la seconde position que de la première position.

15. Dispositif, avec un élément de boîtier, comportant une porte, maintenu de façon articulée à l'élément de boîtier, et pouvant être déplacé par rapport à l'élément de boîtier, et comportant au moins un entraînement de porte (10) selon l'une quelconque des revendications 1 à 12, dans lequel la porte peut être entraîné par l'intermédiaire de l'entraînement de porte, et peut être ainsi déplacé par rapport à l'élément de boîtier.
